(19) Europäisches Patentamt

European Patent Office

Office européen des brevets

(11) **EP 0 966 793 B1**

(12) **EUROPEAN PATENT SPECIFICATION**

(45) Date of publication and mention
of the grant of the patent:
**19.09.2001 Bulletin 2001/38**

(21) Application number: **98904191.8**

(22) Date of filing: **18.02.1998**

(51) Int Cl.⁷: **H04B 1/66**

(86) International application number:
**PCT/FI98/00146**

(87) International publication number:
**WO 98/42083 (24.09.1998 Gazette 1998/38)**

(54) **AUDIO CODING METHOD AND APPARATUS**

AUDIOKODIERVERFAHREN UND -GERÄT

APPAREIL ET PROCEDE DE CODAGE AUDIO

(84) Designated Contracting States:
**ES IT NL**

(30) Priority: **14.03.1997 FI 971108**

(43) Date of publication of application:
**29.12.1999 Bulletin 1999/52**

(73) Proprietor: **NOKIA MOBILE PHONES LTD.**
**02150 Espoo (FI)**

(72) Inventor: **YIN, Lin**
**Milpitas, CA 95035 (US)**

(74) Representative: **Johansson, Folke Anders et al**
**Nokia Corporation,**
**P.O. Box 206**
**00045 Nokia Group (FI)**

(56) References cited:
**EP-A- 0 396 121**     **EP-A- 0 709 981**
**WO-A-96/19876**     **US-A- 4 939 749**

**Description**

The present invention relates to a method and apparatus for audio coding and to a method and apparatus for audio decoding.

It is well known that the transmission of data in digital form provides for increased signal to noise ratios and increased information capacity along the transmission channel. There is however a continuing desire to further increase channel capacity by compressing digital signals to an ever greater extent. In relation to audio signals, two basic compression principles are conventionally applied. The first of these involves removing the statistical or deterministic redundancies in the source signal whilst the second involves suppressing or eliminating from the source signal elements with are redundant insofar as human perception is concerned. Recently, the latter principle has become predominant in high quality audio applications and typically involves the separation of an audio signal into its frequency components (sometimes called "sub-bands"), each of which is analysed and quantised with a quantisation accuracy determined to remove data irrelevancy (to the listener). An example of this is published in EP 0 709 981 and WO 96/19876. Also the ISO (International Standards Organisation) MPEG (Moving Pictures Expert Group) audio coding standard and other audio coding standards employ and further define this principle. However, MPEG (and other standards) also employs a technique know as "adaptive prediction" to produce a further reduction in data rate. The publication EP 0 396 121 teaches an example of adaptive prediction, though only two sub-bands are used there.

The operation of an encoder according to the new MPEG-2 AAC standard is described in detail in the draft International standard document ISO/IEC DIS 13818-7. This new MPEG-2 standard employs backward linear prediction with 672 of 1024 frequency components. It is envisaged that the new MPEG-4 standard will have similar requirements. However, such a large number of frequency components results in a large computational overhead due to the complexity of the prediction algorithm and also requires the availability of large amounts of memory to store the calculated and intermediate coefficients. It is well known that when backward adaptive predictors of this type are used in the frequency domain, it is difficult to further reduce the computational loads and memory requirements. This is because the number of predictors is so large in the frequency domain that even a very simple adaptive algorithm still results in large computational complexity and memory requirements. Whilst it is known to avoid this problem by using forward adaptive predictors which are updated in the encoder and transmitted to the decoder, the use of forward adaptive predictors in the frequency domain inevitably results in a large amount of "side" information because the number of predictors is so large.

It is an object to the present invention to overcome or at least mitigate the disadvantages of known prediction methods.

This and other objects are achieved by coding an audio signal using error signals to remove redundancy in each of a plurality of frequency sub-bands of the audio signal and in addition generating long term prediction coefficients in the time domain which enable a current frame of the audio signal to be predicted from one or more previous frames.

According to a first aspect of the present invention there is provided a method of coding an audio signal, the method comprising the steps of:

receiving an audio signal $x$ to be coded;
generating frequency sub-bands from a time frame of the received audio signal;
generating a quantised audio signal $\tilde{x}$ from the received audio signal $x$;
generating a set of long-term prediction coefficients $A$;
predicting a current time frame of the received audio signal $x$ using the set of long-term prediction coefficients $A$ for each of the sub-bands of a time frame directly from at least one previous time frame of the quantised audio signal $\tilde{x}$;
using the the set of long-term prediction coefficients $A$ to generate a predicted audio signal $\hat{x}$ of the quantised audio signal $\tilde{x}$;
comparing the received audio signal $x$ with the predicted audio signal $\hat{x}$ and generating an error signal $E(k)$ for each of a plurality of frequency sub-bands;
quantising the error signals $E(k)$ to generate a set of quantised error signals $\tilde{E}_l(k)$; and
combining the quantised error signal $\tilde{E}_l(k)$ and the prediction coefficients $A$ to generate a coded audio signal.

The present invention provides for compression of an audio signal using a forward adaptive predictor in the time domain. For each time frame of a received signal, it is only necessary to generate and transmit a single set of forward adaptive prediction coefficients for transmission to the decoder. This is in contrast to known forward adaptive prediction techniques which require the generation of a set of prediction coefficients for each frequency sub-band of each time frame. In comparison to the prediction gains obtained by the present invention, the side information of the long term predictor is negligible.

Certain embodiments of the present invention enable a reduction in computational complexity and in memory requirements. In particular, in comparison to the use of backward adaptive prediction, there is no requirement to recalculate the prediction coefficients in the decoder. Certain embodiments of the invention are also able to respond more quickly to signal changes than conventional backward adaptive predictors.

In one embodiment of the invention, the received audio signal $x$ is transformed in frames $x_m$ from the time domain to the frequency domain to provide a set of frequency sub-band signals $X(k)$. The predicted audio signal $\hat{x}$ is similarly transformed from the time domain to the frequency domain to generate a set of predicted frequency sub-band signals $\hat{x}(k)$ and the comparison between the received audio signal $x$ and the predicted audio signal $\hat{x}$ is carried out in the frequency domain, comparing respective sub-band signals against each other to generate the frequency sub-band error signals $E(k)$. The quantised audio signal $\tilde{x}$ is generated by summing the predicted signal and the quantised error signal, either in the time domain or in the frequency domain.

In an alternative embodiment of the invention, the comparison between the received audio signal $x$ and the predicted audio signal $\hat{x}$ is carried out in the time domain to generate an error signal $e$ also in the time domain. This error signal $e$ is then converted from the time to the frequency domain to generate said plurality of frequency sub-band error signals $E(k)$.

Preferably, the quantisation of the error signals is carried out according to a psycho-acoustic model.

According to a second aspect of the present invention there is provided a method of decoding a coded audio signal, the method comprising the steps of:

receiving a coded audio signal comprising a quantised error signal $\tilde{E}(k)$ for each of a plurality of frequency sub-bands of the audio signal and, for each time frame of the audio signal, a set of prediction coefficients $A$ which can be used to predict each frequency sub-band of a current time frame $x_m$ of the received audio signal directly from at least one previous time frame of a reconstructed quantised audio signal $\tilde{x}$;

generating said reconstructed quantised audio signal $\tilde{x}$ from the quantised error signals $\tilde{E}(k)$;

using the prediction coefficients $A$ and the quantised audio signal $\tilde{x}$ to generate a predicted audio signal $\hat{x}$;

transforming the predicted audio signal $\hat{x}$ from the time domain to the frequency domain to generate a set of predicted frequency sub-band signals $\tilde{E}_l(k)$ for combining with the quantised error signals $\tilde{E}(k)$ to generate a set of reconstructed frequency sub-band signals $\tilde{x}_l(k)$; and

performing a frequency to time domain transform on the reconstructed frequency sub-band signals $\tilde{x}_l(k)$ to generate the reconstructed quantised audio signal $\tilde{x}$.

Embodiments of the above second aspect of the invention are particularly applicable where only a sub-set of all possible quantised error signals $\tilde{E}(k)$ are received, some sub-band data being transmitted directly by the transmission of audio sub-band signals $X(k)$. The signals $\tilde{X}(k)$ and $X(k)$ are combined appropriately prior to carrying out the frequency to time transform.

According to a third aspect of the present invention there is provided apparatus for coding an audio signal, the apparatus comprising:

an input for receiving an audio signal $x$ to be coded;

first generating means for generating frequency sub-bands from a time frame of the received audio signal;

quantisation means coupled to said input for generating from the received audio signal $x$ a quantised audio signal $\tilde{x}$;

characterized in said apparatus comprising:

prediction means coupled to said quantisation means for generating a set of long-term prediction coefficients $A$ to be used for each of the sub-bands of a time frame for predicting a current time frame $x_m$ of the received audio signal $x$ directly from at least one previous time frame of the quantised audio signal $\tilde{x}$;

second generating means for generating a predicted audio signal $\hat{x}$ by using the set of long-term prediction coefficients $A$ and the quantised audio signal $\tilde{x}$ and for comparing the received audio signal $x$ with the predicted audio signal $\hat{x}$ to generate an error signal $E(k)$ for each of a plurality of frequency sub-bands;

quantisation means for quantising the error signals $E(k)$ to generate a set of quantised error signals $\tilde{E}(k)$; and

combining means for combining the quantised error signals $\tilde{E}(k)$ with the prediction coefficients $A$ to generate a coded audio signal.

In one embodiment, said generating means comprises first transform means for transforming the received audio signal x from the time to the frequency domain and second transform means for transforming the predicted audio signal $\hat{x}$ from the time to the frequency domain, and comparison means arranged to compare the resulting frequency domain signals in the frequency domain.

In an alternative embodiment of the invention, the generating means is arranged to compare the received audio signal x and the predicted audio signal $\hat{x}$ in the time domain.

According to a fourth aspect of the present invention there is provided apparatus for decoding a coded audio signal *x*, where the coded audio signal comprises a quantised error signal $\tilde{E}(k)$ for each of a plurality of frequency sub-bands of the audio signal and a set of prediction coefficients *A* to be used for each of the frequency sub-bands of a time frame of the audio signal and wherein the prediction coefficients *A* can be used to predict a current time frame $x_m$ of the received audio signal directly from at least one previous time frame of a reconstructed quantised audio signal $\tilde{x}$, the apparatus comprising:

an input for receiving the coded audio signal;

generating means for generating said reconstructed quantised audio signal $\tilde{x}$ from the quantised error signals $\tilde{E}(k)$; and

signal processing means for generating a predicted audio signal $\hat{x}$ from the prediction coefficients *A* and said reconstructed audio signal $\tilde{x}$,

wherein said generating means comprises first transforming means for transforming the predicted audio signal $\hat{x}$ from the time domain to the frequency domain to generate a set of predicted frequency sub-band signals $\hat{x}(k)$ combining means for combining said set of predicted frequency sub-band signals $\hat{x}(k)$ with the quantised error signals $\tilde{E}_l(k)$ to generate a set of reconstructed frequency sub-band signals $\tilde{x}(k)$, and second transforming means for performing a frequency to time domain transform on the reconstructed frequency sub-band signals $\tilde{X}_l(k)$ to generate the reconstructed quantised audio signal $\tilde{x}$.

For a better understanding of the present invention and in order to show how the same may be carried into effect reference will now be made, by way of example, to the accompanying drawings, in which:

Figure 1 shows schematically an encoder for coding a received audio signal;
Figure 2 shows schematically a decoder for decoding an audio signal coded with the encoder of Figure 1;
Figure 3 shows the encoder of Figure 1 in more detail including a predictor tool of the encoder;
Figure 4 shows the decoder of Figure 2 in more detail including a predictor tool of the decoder; and
Figure 5 shows in detail a modification to the encoder of Figure 1 and which employs an alternative prediction tool.

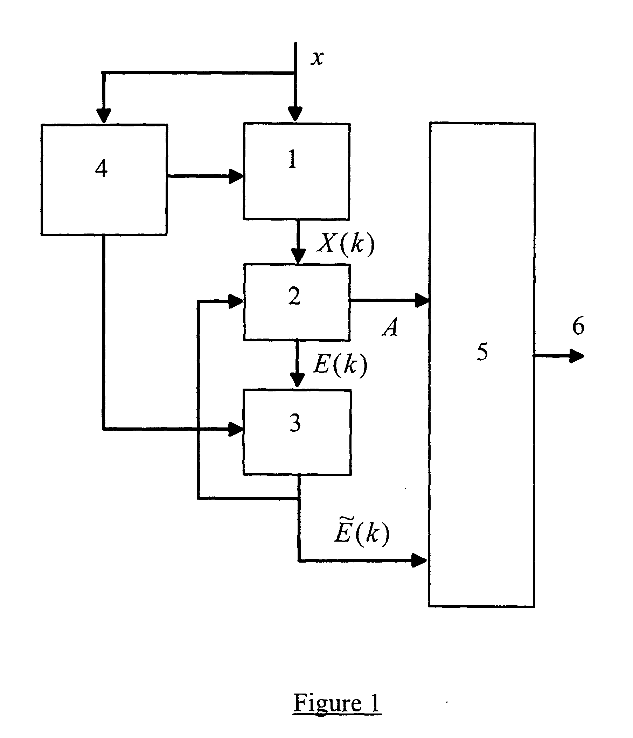

There is shown in Figure 1 a block diagram of an encoder which performs the coding function defined in general terms in the MPEG-2 AAC standard. The input to the encoder is a sampled monophasic signal *x* whose sample points are grouped into time frames or blocks of 2N points, i.e.

$$x_m = (x_m(0), x_m(1), ..., x_m(2N\text{-}1))^T \tag{1}$$

where m is the block index and T denotes transposition. The grouping of sample points is carried out by a filter bank tool 1 which also performs a modified discrete cosine transform (MDCT) on each individual frame of the audio signal to generate a set of frequency sub-band coefficients

$$x_m = (X_m(0), X_m(1), ..., X_m(N\text{-}1))^T \tag{2}$$

The sub-bands are defined in the MPEG standard.

The forward MDCT is defined by

$$X_m(k) = \sum_{i=0}^{2N-1} f(i) x_m(i) \cos(\frac{\pi}{4N}(2i+1+N)(2k+1)),$$
$$k = 0, \cdots, N-1 \tag{3}$$

where $f(i)$ is the analysis-synthesis window, which is a symmetric window such that its added-overlapped effect is producing a unity gain in the signal.

The frequency sub-band signals $X(k)$ are in turn applied to a prediction tool 2 (described in more detail below) which seeks to eliminate long term redundancy in each of the sub-band signals. The result is a set of frequency sub-band error signals

$$E_m(k) = (E_m(0), E_m(1),...,E_m(N\text{-}1))^T \qquad (4)$$

which are indicative of long term changes in respective sub-bands, and a set of forward adaptive prediction coefficients *A* for each frame.

The sub-band error signals $E(k)$ are applied to a quantiser 3 which quantises each signal with a number of bits determined by a psychoacoustic model. This model is applied by a controller 4. As discussed, the psychoacoustic model is used to model the masking behaviour of the human auditory system. The quantised error signals $\tilde{E}(k)$ and the prediction coefficients *A* are then combined in a bit stream multiplexer 5 for transmission via a transmission channel 6.

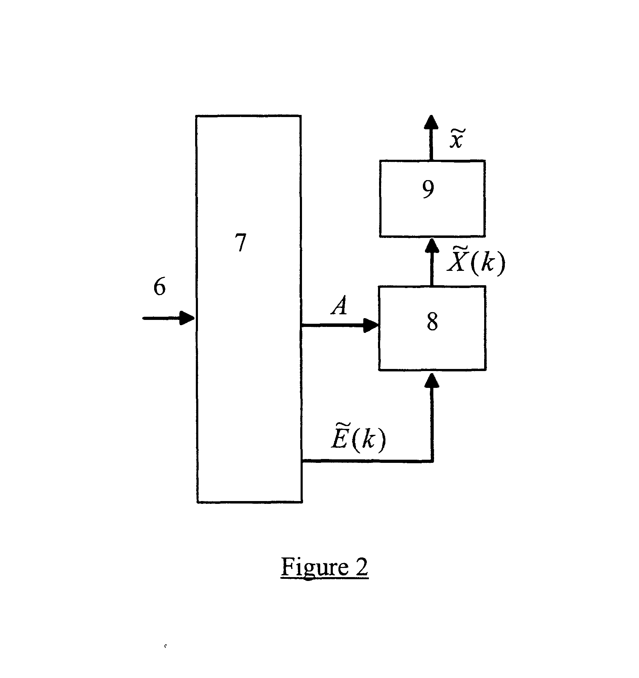

Figure 2 shows the general arrangement of a decoder for decoding an audio signal coded with the encoder of Figure 1. A bit-stream demultiplexer 7 first separates the prediction coefficients *A* from the quantised error signals $\tilde{E}(k)$ and separates the error signals into the separate sub-band signals. The prediction coefficients *A* and the quantised error sub-band signals $\tilde{E}(k)$ are provided to a prediction tool 8 which reverses the prediction process carried out in the encoder, i.e. the prediction tool reinserts the redundancy extracted in the encoder, to generate reconstructed quantised sub-band signals $\tilde{X}(k)$. A filter bank tool 9 then recovers the time domain signal $\tilde{x}$, by an inverse transformation on the received version $\tilde{X}(k)$, described by

$$\tilde{x}_m(i) = \tilde{u}_{m-1}(i+N) + \tilde{u}_m(i),$$
$$i = 0,\cdots,N-1 \qquad (5)$$

where

$$\tilde{u}_k(i), i = 0,\cdots,2N-1$$

are the inverse transform of $\tilde{X}$

$$\tilde{u}_m(i) = f(i)\sum_{k=0}^{N-1}\tilde{X}_m(k)\cos(\frac{\pi}{4N}(2i+1+N)(2k+1)),$$
$$i = 0,\cdots,2N-1$$

and which approximates the original audio signal *x*.

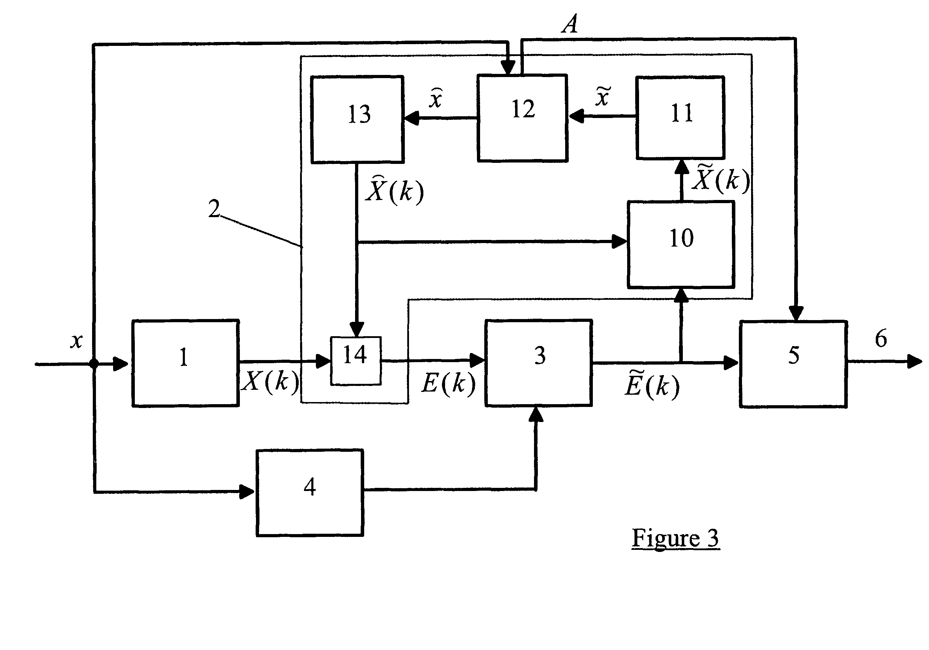

Figure 3 illustrates in more detail the prediction method of the encoder of Figure 1. Using the quantised frequency sub-band error signals $E(k),$ a set of quantised frequency sub-band signals $\tilde{x}(k)$ are generated by a signal processing unit 10. The signals $\tilde{x}(k)$ are applied in turn to a filter bank 11 which applies an inverse modified discrete cosine transform (IMDCT) to the signals to generate a quantised time domain signal $\tilde{x}$. The signal $\tilde{x}$ is then applied to a long term predictor tool 12 which also receives the audio input signal *x*. The predictor tool 12 uses a long term (LT) predictor to remove the redundancy in the audio signal present in a current frame m+1, based upon the previously quantised data. The transfer function P of this predictor is:

$$P(z) = \sum_{k=-m_1}^{m_2}b_k z^{-(\alpha+k)} \qquad (5)$$

where $\alpha$ represents a long delay in the range 1 to 1024 samples and $b_k$ are prediction coefficients. For $m_1 = m_2 = 0$ the predictor is one tap whilst for $m_1 = m_2 = 1$ the predictor is three tap.

The parameters $\alpha$ and $b_k$ are determined by minimising the mean squared error after LT prediction over a period of 2N samples. For a one tap predictor, the LT prediction residual *r(i)* is given by:

$$r(i) = x(i) - b\tilde{x}(i - 2N + 1 - \alpha) \tag{6}$$

where $x$ is the time domain audio signal and $\tilde{x}$ is the time domain quantised signal. The mean squared residual R is given by:

$$R = \sum_{i=0}^{2N-1} r^2(i) = \sum_{i=0}^{2N-1} (x(i) - b\tilde{x}(i - 2N + 1 - \alpha))^2 \tag{7}$$

Setting $\partial R/\partial b = 0$ yields

$$b = \frac{\sum_{i=0}^{2N-1} x(i)\tilde{x}(i - 2N + 1 - \alpha)}{\sum_{i=0}^{2N-1} (\tilde{x}(i - 2N - \alpha))^2} \tag{8}$$

and substituting for $b$ into equation (7) gives

$$R = \sum_{i=0}^{2N-1} x^2(i) - \frac{\left(\sum_{i=0}^{2N-1} x(i)\tilde{x}(i - 2N + 1 - \alpha)\right)^2}{\sum_{i=0}^{2N-1} (\tilde{x}(n - 2N + 1 - \alpha))^2}$$

Minimizing $R$ means maximizing the second term in the right-hand side of equation (9). This term is computed for all possible values of $\alpha$ over its specified range, and the value of $\alpha$ which maximizes this term is chosen. The energy in the denominator of equation (9), identified as $\Omega$, can be easily updated from delay ($\alpha$ - 1) to $\alpha$ instead of recomputing it afresh using:

$$\Omega_\alpha = \Omega_{\alpha-1} + \tilde{x}^2(-\alpha) - \tilde{x}^2(-\alpha + N) \tag{10}$$

If a one-tap LT predictor is used, then equation (8) is used to compute the prediction coefficient $b_j$. For a $j$-tap predictor, the LT prediction delay $\alpha$ is first determined by maximizing the second term of Equation (9) and then a set of $j \times j$ equations is solved to compute the $j$ prediction coefficients.

The LT prediction parameters $A$ are the delay $\alpha$ and prediction coefficient $b_j$. The delay is quantized with 9 to 11 bits depending on the range used. Most commonly 10 bits are utilized, with 1024 possible values in the range 1 to 1024. To reduce the number of bits, the LT prediction delays can be delta coded in even frames with 5 bits. Experiments show that it is sufficient to quantize the gain with 3 to 6 bits. Due to the nonuniform distribution of the gain, nonuniform quantization has to be used.

In the method described above, the stability of the LT synthesis filter $1 / P(z)$ is not always guaranteed. For a one-tap predictor, the stability condition is $|b| \leq 1$. Therefore, the stabilization can be easily carried out by setting $|b| = 1$ whenever $|b| > 1$. For a 3-tap predictor, another stabilization procedure can be used such as is described in R.P. Ramachandran and P. Kabal, "Stability and performance analysis of pitch filters in speech coders," IEEE Trans. ASSP, vol. 35, no.7, pp.937-946, July 1987. However, the instability of the LT synthesis filter is not that harmful to the quality of the reconstructed signal. The unstable filter will persist for a few frames (increasing the energy), but eventually periods of stability are encountered so that the output does not continue to increase with time.

After the LT predictor coefficients are determined, the predicted signal for the (m+1)th frame can be determined:

$$\hat{x}(i) = \sum_{j=-m_1}^{m_2} b_j \tilde{x}(i - 2N + 1 - j - \alpha), \qquad (11)$$

$$i = mN + 1, mN + 2, \ldots, (m+1)N$$

The predicted time domain signal $x$ is then applied to a filter bank 13 which applies a MDCT to the signal to generate predicted spectral coefficients $\tilde{x}_{m+1}(k)$ for the $(m + 1)$th frame. The predicted spectral coefficients $\hat{x}(k)$ are then subtracted from the spectral coefficients $X(k)$ at a subtractor 14.

In order to guarantee that prediction is only used if it results in a coding gain, an appropriate predictor control is required and a small amount of predictor control information has to be transmitted to the decoder. This function is carried out in the subtractor 14. The predictor control scheme is the same as for the backward adaptive predictor control scheme which has been used in MPEG-2 Advanced Audio Coding (AAC). The predictor control information for each frame, which is transmitted as side information, is determined in two steps. Firstly, for each scalefactor band it is determined whether or not prediction leads to a coding gain and if yes, the **predictor_used** bit for that scalefactor band is set to one. After this has been done for all scalefactor bands, it is determined whether the overall coding gain by prediction in this frame compensates at least the additional bit need for the predictor side information. If yes, the **predictor_data_present** bit is set to 1 and the complete side information including that needed for predictor reset is transmitted and the prediction error value is fed to the quantizer. Otherwise, the **predictor_data_present** bit is set to 0 and the **prediction_used** bits are all reset to zero and are not transmitted. In this case, the spectral component value is fed to the quantizer 3. As described above, the predictor control first operates on all predictors of one scalefactor band and is then followed by a second step over all scalefactor bands.

It will be apparent that the aim of LT prediction is to achieve the largest overall prediction gain. Let $G_l$ denote the prediction gain in the $l$ th frequency sub-band. The overall prediction gain in a given frame can be calculated as follows:

$$G = \sum_{l=1 \ \& \ (G_l > 0)}^{N_s} G_l \qquad (12)$$

If the gain compensates the additional bit need for the predictor side information, i.e., $G > T$ (dB), the complete side information is transmitted and the predictors which produces positive gains are switched on. Otherwise, the predictors are not used.

The LP parameters obtained by the method set out above are not directly related to maximising the gain. However, by calculating the gain for each block and for each delay within the selected range (1 to 1024 in this example), and by selecting that delay which produces the largest overall prediction gain, the prediction process is optimised. The selected delay $\alpha$ and the corresponding coefficients b are transmitted as side information with the quantised error sub-band signals. Whilst the computational complexity is increased at the encoder, no increase in complexity results at the decoder.

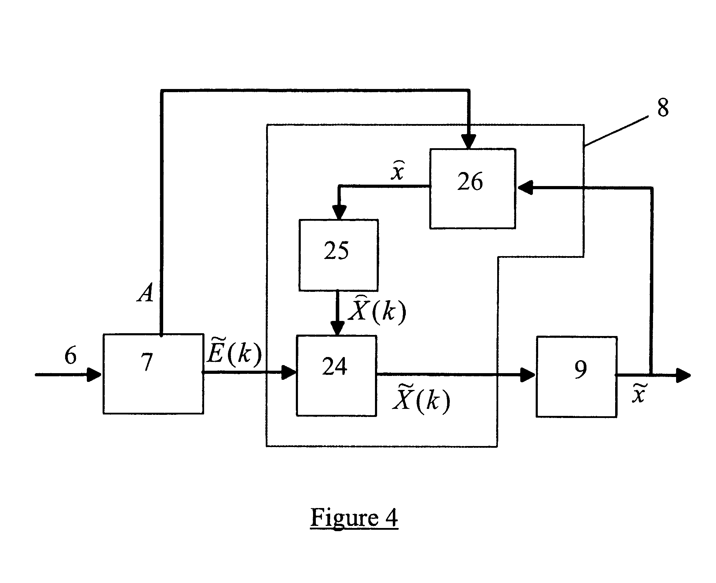

Figure 4 shows in more detail the decoder of Figure 2. The coded audio signal is received from the transmission channel 6 by the bitstream demultiplexer 7 as described above. The bitstream demultiplexer 7 separates the prediction coefficients $A$ and the quantised error signals $\tilde{E}(k)$ and provides these to the prediction tool 8. This tool comprises a combiner 24 which combines the quantised error signals $\tilde{E}(k)$ and a predicted audio signal in the frequency domain $\hat{x}$ to generate a reconstructed audio signal $\tilde{x}_i(k)$ also in the frequency domain. The filter bank 9 converts the reconstructed signal $\tilde{x}(k)$ from the frequency domain to the time domain to generate a reconstructed time domain audio signal $\tilde{x}_i$. This signal is in turn fed-back to a long term prediction tool which also receives the prediction coefficients $A$. The long term prediction tool 26 generates a predicted current time frame from previous reconstructed time frames using the prediction coefficients for the current frame. A filter bank 25 transforms the predicted signal $\hat{x}$.

It will be appreciated the predictor control information transmitted from the encoder may be used at the decoder to control the decoding operation. In particular, the **predictor_used** bits may be used in the combiner 24 to determine whether or not prediction has been employed in any given frequency band.

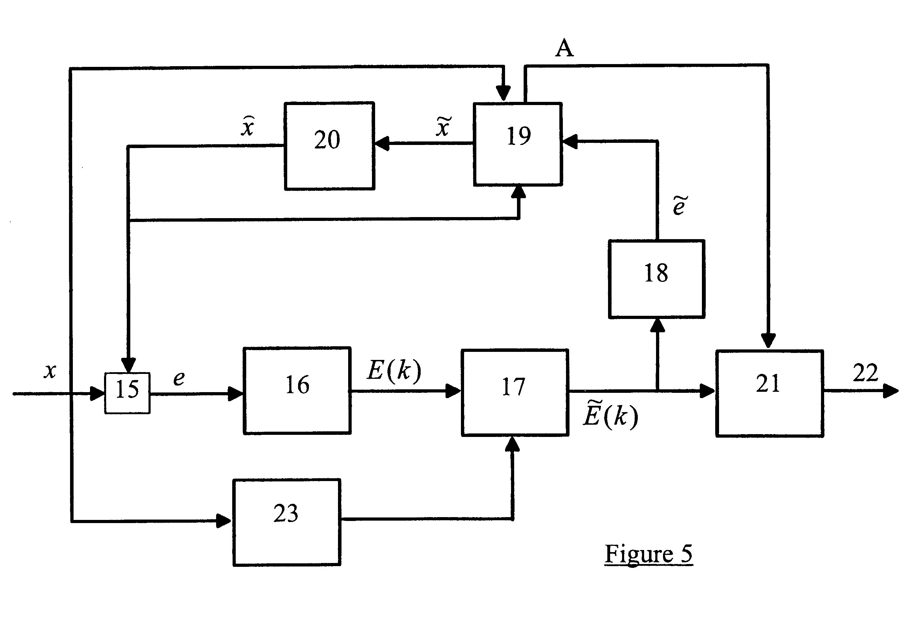

There is shown in Figure 5 an alternative implementation of the audio signal encoder of Figure 1 in which an audio signal $x$ to be coded is compared with the predicted signal $\hat{x}$ in the time domain by a comparator 15 to generate an error signal $e$ also in the time domain. A filter bank tool 16 then transforms the error signal from the time domain to the frequency domain to generate a set of frequency sub-band error signals $E(k)$. These signals are then quantised by a quantiser 17 to generate a set of quantised error signals $\tilde{E}(k)$.

A second filter bank 18 is then used to convert the quantised error signals $\tilde{E}(k)$ back into the time domain resulting in a signal $\tilde{e}$. This time domain quantised error signal $\tilde{e}$ is then combined at a signal processing unit 19 with the predicted time domain audio signal $\hat{x}$ to generate a quantised audio signal $\tilde{x}$. The signal processing unit ie prediction tool 19 performs the same function as the tool 12 of the encoder of Figure 3, generating the predicted audio signal $\hat{x}$ and the prediction coefficients $A$. The prediction coefficients and the quantised error signals are combined at a bit stream multiplexer 21 for transmission over the transmission channel 22. As described above, the error signals are quantised in accordance with a psycho-acoustical model by a controller 23.

The audio coding algorithms described above allow the compression of audio signals at low bit rates. The technique is based on long term (LT) prediction. Compared to the known backward adaptive prediction techniques, the techniques described here deliver higher prediction gains for single instrument music signals and speech signals whilst requiring only low computational complexity.

**Claims**

1. A method of coding an audio signal, the method comprising the steps of:

   receiving an audio signal x to be coded;
   generating (1) frequency sub-bands from a time frame of the received audio signal;
   generating (9,11) a quantised audio signal $\tilde{x}$ from the received audio signal $x$;
   generating (2) a set of long-term prediction coefficients $A$;
   predicting (8) a current time frame of the received audio signal by using the set of long-term prediction coefficients $A$ for each of the sub-bands of a time frame directly from at least one previous time frame of the quantised audio signal $\tilde{x}$;
   using (12) the set of long-term prediction coefficients $A$ to generate a predicted audio signal $\hat{x}$ of the quantised audio signal $\tilde{x}$;
   comparing (14) the received audio signal $x$ with the predicted audio signal $\hat{x}$ and generating an error signal $E(k)$ for each of a plurality of frequency sub-bands;
   quantising (3) the error signals $E(k)$ to generate a set of quantised error signals $\tilde{E}(k)$; and
   combining (5) the quantised error signals $\tilde{E}(k)$ and the prediction coefficients $A$ to generate a coded audio signal.

2. A method according to claim 1 and comprising transforming (1) the received audio signal $x$ in frames $x_m$ from the time domain to the frequency domain to provide a set of frequency sub-band signals $X(k)$ and transforming (13) the predicted audio signal $\hat{x}$ from the time domain to the frequency domain to generate a set of predicted frequency sub-band signals $\hat{X}$, wherein the comparison between the received audio signal $x$ and the predicted audio signal $\hat{x}$ is carried out in the frequency domain, comparing (14) respective sub-band signals against each other to generate the frequency sub-band error signals $E(k)$.

3. A method according to claim 1 and comprising carrying (15) out the comparison between the received audio signal $x$ and the predicted audio signal $\hat{x}$ in the time domain to generate an error signal $e$ also in the time domain and converting (16) the error signal $e$ from the time to the frequency domain to generate said plurality of frequency sub-band error signals $E(k)$.

4. A method of decoding a coded audio signal, the method comprising the steps of:

   receiving a coded audio signal comprising a quantised error signal $\tilde{E}(k)$ for each of a plurality of frequency sub-bands of the audio signal and, for each time frame of the audio signal, a set of prediction coefficients $A$ which can be used to predict each frequency sub-band of a current time frame $x_m$ of the received audio signal directly from at least one previous time frame of a reconstructed quantised audio signal $\tilde{x}$;
   generating (24,25,9) said reconstructed quantised audio signal $\tilde{x}$ from the quantised error signals $\tilde{E}(k)$;
   using (26) the prediction coefficients $A$ and the quantised audio signal $\tilde{x}$ to generate a predicted audio signal $\hat{x}$;
   transforming (25) the predicted audio signal $\hat{x}$ from the time domain to the frequency domain to generate a set of predicted frequency sub-band signals $\hat{X}$ for combining with the quantised error signals $\tilde{E}(k)$ to generate (24) a set of reconstructed frequency sub-band signals $\tilde{X}(k)$; and
   performing (9) a frequency to time domain transform on the reconstructed frequency sub-band signals $\tilde{X}(k)$ to generate the reconstructed quantised audio signal $\tilde{x}$.

5. Apparatus for coding an audio signal, the apparatus comprising:

an input for receiving an audio signal x to be coded;

first generating means (1) for generating frequency sub-bands from a time frame of the received audio signal; processing means (2,3;15-19) coupled to said input for generating from the received audio signal *x* a quantised audio signal $\tilde{x}$; prediction means (12;19) coupled to said processing means (3) for generating a set of long-term prediction coefficients *A* to be used for each of the sub-bands of a time frame for predicting a current time frame $x_m$ of the received audio signal *x* directly from at least one previous time frame of the quantised audio signal $\tilde{x}$;

second generating means (10-14;20,15) for generating a predicted audio signal $\hat{x}$ by using the set of long-term prediction coefficients *A* and the quantised audio signal $\tilde{x}$ and for comparing the received audio signal *x* with the predicted audio signal $\hat{x}$ to generate an error signal *E(k)* for each of a plurality of frequency sub-bands;

quantisation means (3; 17) for quantising the error signals *E(k)* to generate a set of quantised error signals $\tilde{E}(k)$; and

combining means (5;21) for combining the quantised error signals $\tilde{E}(k)$ with the prediction coefficients *A* to generate a coded audio signal.

6. Apparatus according to claim 5, wherein said second generating means comprises first transform means (1) for transforming the received audio signal *x* from the time to the frequency domain and second transform means (13) for transforming the predicted audio signal $\hat{x}$ from the time to the frequency domain, and comparison means (14) arranged to compare the resulting frequency domain signals in the frequency domain.

7. Apparatus according to claim 5, wherein the second generating means is arranged to compare the received audio signal x and the predicted audio signal $\hat{x}$ in the time domain.

8. Apparatus for decoding a coded audio signal *x*, where the coded audio signal comprises a quantised error signal $\tilde{E}(k)$ for each of a plurality of frequency sub-bands of the audio signal and a set of prediction coefficients *A* to be used for each of the frequency sub-bands of a time frame of the audio signal and wherein the prediction coefficients *A* can be used to predict a current time frame $x_m$ of the received audio signal directly from at least one previous time frame of a reconstructed quantised audio signal $\tilde{x}$, the apparatus comprising:

an input for receiving the coded audio signal;

generating means (24,25,9) for generating said reconstructed quantised audio signal $\tilde{x}$ from the quantised error signals $\tilde{E}(k)$; and

signal processing means (26) for generating a predicted audio signal $\hat{x}$ from the prediction coefficients *A* and said reconstructed audio signal $\tilde{x}$,

wherein said generating means comprises first transforming means (25) for transforming the predicted audio signal $\hat{x}$ from the time domain to the frequency domain to generate a set of predicted frequency sub-band signals $\hat{X}$, combining means (24) for combining said set of predicted frequency sub-band signals $\hat{x}$ with the quantised error signals $\tilde{E}(k)$ to generate a set of reconstructed frequency sub-band signals $\tilde{X}(k)$, and second transforming means (9) for performing a frequency to time domain transform on the reconstructed frequency sub-band signals $\tilde{X}(k)$ to generate the reconstructed quantised audio signal $\tilde{x}$.

## Patentansprüche

1. Verfahren zum Codieren eines Audiosignals mit den folgenden Schritten:

   - Empfangen eines zu codierenden Audiosignals x;
   - Erzeugen (1) mehrerer Frequenzunterbänder aus einem Zeitrahmen des empfangenen Audiosignals;
   - Erzeugen (9, 11) eines quantisierten Audiosignals $\tilde{x}$ aus dem empfangenen Audiosignal x;
   - Erzeugen (2) eines Satzes von Langzeitvorhersage-Koeffizienten A;
   - Vorhersagen (8) eines aktuellen Zeitrahmens des empfangenen Audiosignals unter Verwendung des Satzes von Langzeit-Vorhersagekoeffizienten A für jedes der Unterbäder eines Zeitrahmens unmittelbar aus mindestens einem vorherigen Zeitrahmen des quantisierten Audiosignals $\hat{x}$;
   - Verwenden (12) des Satzes von Langzeit-Vorhersagekoeffizienten A zum Erzeugen eines vorhergesagten Audiosignals $\hat{x}$ zum quantisierten Audiosignal $\tilde{x}$;
   - Vergleichen (14) des empfangenen Audiosignals x mit dem vorhergesagten Audiosignal $\hat{x}$ und Erzeugen eines Abweichungssignals E(k) für jedes von mehreren Frequenzunterbändern;

- Quantisieren (3) der Abweichungssignale E(k) zum Erzeugen eines Satzes quantisierter Abweichungssignale $\bar{E}(k)$; und
- Kombinieren (5) der quantisierten Abweichungssignale E(k) und der Vorhersagekoeffizienten A zum Erzeugen eines codierten Audiosignals.

2. Verfahren nach Anspruch 1 mit einem Transformieren des in Rahmen $x_m$ empfangenen Audiosignals x aus der Zeitdomäne in die Frequenzdomäne, um einen Satz von Frequenzunterband-Signalen X(k) zu erzeugen, und einem Transformieren des vorhergesagten Audiosignals $\hat{x}$ aus der Zeitdomäne in die Frequenzdomäne, um einen Satz vorhergesagter Frequenzunterband-Signale $\hat{X}$ zu erzeugen, wobei der Vergleich zwischen dem empfangenen Audiosignal x und dem vorhergesagten Audiosignal $\hat{x}$ in der Frequenzdomäne ausgeführt wird, wobei die jeweiligen Unterbandsignale miteinander verglichen werden, um die Frequenzunterband-Abweichungssignale E(k) zu erzeugen.

3. Verfahren nach Anspruch 1, bei dem der Vergleich zwischen dem empfangenen Audiosignal x und dem vorhergesagten Audiosignal $\hat{x}$ in der Zeitdomäne ausgeführt wird (15), um ein Abweichungssignal e ebenfalls in der Zeitdomäne zu erzeugen, und das Abweichungssignal e aus der Zeit- in die Frequenzdomäne umgesetzt wird (16), um die mehreren Frequenzunterband-Abweichungssignale E(k) zu erzeugen.

4. Verfahren zum Decodieren eines codierten Audiosignals, mit den folgenden Schritten:

- Empfangen eines codierten Audiosignals, das ein quantisiertes Abweichungssignal $\bar{E}(k)$ für jedes einer Vielzahl von Frequenzunterbändern des Audiosignals sowie, für jeden Zeitrahmen des Audiosignals, einen Satz von Vorhersagekoeffizienten A enthält, die dazu verwendet werden können, jedes Frequenzunterband eines aktuellen Zeitrahmens $x_m$ des empfangenen Audiosignals unmittelbar aus mindestens einem vorherigen Zeitrahmen eines wiederhergestellten, quantisierten Audiosignals $\tilde{x}$ vorherzusagen;
- Erzeugen (24, 25, 9) des wiederhergestellten, quantisierten Audiosignals $\tilde{x}$ aus den quantisierten Abweichungssignalen $\widetilde{\varepsilon}(k)$;
- Verwenden (26) der Vorhersagekoeffizienten A und des quantisierten Audiosignals $\tilde{x}$ zum Erzeugen eines vorhergesagten Audiosignals $\hat{x}$;
- Transformieren (25) des vorhergesagten Audiosignals $\hat{x}$ aus der Zeitdomäne in die Frequenzdomäne, um einen Satz vorhergesagter Frequenzunterband-Signale $\hat{X}$ für Kombination mit den quantisierten Abweichungssignalen $\tilde{\varepsilon}(k)$ zu erzeugen, um einen Satz wiederhergestellter Frequenzunterband-Signale $\hat{x}$ zu erzeugen (24); und
- Ausführen (9) einer Transformation von der Frequenz- in die Zeitdomäne an den wiederhergestellten Frequenzunterband-Signalen $\hat{x}_l(k)$, um das wiederhergestellte, quantisierte Audiosignal $\tilde{x}$ zu erzeugen.

5. Vorrichtung zum Codieren eines Audiosignals mit:

- einem Eingang zum Empfangen eines zu codierenden Audiosignals x;
- einer ersten Erzeugungseinrichtung (1) zum Erzeugen von Frequenzunterbändern aus einem Zeitrahmen des empfangenen Audiosignals;
- einer Verarbeitungseinrichtung (2, 3; 15 - 19), die mit dem Eingang verbunden ist, um aus dem empfangenen Audiosignal x ein quantisiertes Audiosignal $\tilde{x}$ zu erzeugen;
- einer Vorhersageeinrichtung (12; 19), die mit der Verarbeitungseinrichtung (3) verbunden ist, um einen Satz von Langzeitvorhersage-Koeffizienten A zu erzeugen, die für jedes der Unterbänder eines Zeitrahmens dazu zu verwenden sind, einen aktuellen Zeitrahmen $x_m$ des empfangenen Audiosignals unmittelbar aus mindestens einem vorherigen Zeitrahmen des quantisierten Audiosignals $\tilde{x}$ vorherzusagen;
- einer zweiten Erzeugungseinrichtung (10 - 14; 20, 15) zum Erzeugen eines vorhergesagten Audiosignals $\hat{x}$ unter Verwendung des Satzes von Vorhersagekoeffizienten A und des quantisierten Audiosignals $\tilde{x}$ und zum Vergleichen des empfangenen Audiosignals x mit dem vorhergesagten Audiosignal $\hat{x}$, um für jedes von mehreren Frequenzunterbändern ein Abweichungssignal E(k) zu erzeugen;
- einer Quantisierungseinrichtung (3; 17) zum Quantisieren der Abweichungssignale E(k) zum Erzeugen eines Satzes quantisierter Abweichungssignale $\bar{E}(k)$; und
- einer Kombiniereinrichtung (5; 21) zum Kombinieren der quantisierten Abweichungssignale $\bar{E}(k)$ und der Vorhersagekomponenten A zum Erzeugen eines codierten Audiosignals.

6. Vorrichtung nach Anspruch 5, bei der die zweite Erzeugungsein richtung eine erste Transformationseinrichtung (1) zum Transformieren des empfangenen Audiosignals x aus der Zeitdomäne in die Frequenzdomäne, eine zweite Transformationseinrichtung (13) zum Transformieren des vorhergesagten Audiosignals $\hat{x}$ aus der Zeit- in die Frequenzdomäne sowie eine Vergleichseinrichtung (14) aufweist, die so ausgebildet ist, dass sie die sich ergebenden Signale in der Frequenzdomäne innerhalb derselben vergleicht.

**7.** Vorrichtung nach Anspruch 5, bei der die zweite Erzeugungseinrichtung so ausgebildet ist, dass sie das empfangene Audiosignal x und das vorhergesagte Audiosignal $\hat{x}$ in der Zeitdomäne vergleicht.

**8.** Vorrichtung zum Decodieren eines codierten Audiosignals x, das ein quantisiertes Abweichungssignal $\tilde{E}(k)$ für jedes von mehreren Frequenzunterbändern des Audiosignals und einen für jedes der Frequenzunterbänder eines Zeitrahmens des Audiosignals zu verwendenden Satz von Vorhersagekoeffizienten A enthält, die dazu verwendbar sind, einen aktuellen Zeitrahmen $x_m$ des empfangenen Audiosignals unmittelbar aus mindestens einem vorhergehenden Zeitrahmen eines wiederhergestellten, quantisierten Audiosignals $\tilde{x}$ vorherzusagen; mit

- einem Eingang zum Empfangen des codierten Audiosignals;
- einer Erzeugungseinrichtung (24, 25, 9) zum Erzeugen des wiederhergestellten, quantisierten Audiosignals $\tilde{x}$ aus den quantisierten Abweichungssignalen $\tilde{E}(k)$; und
- einer Signalverarbeitungseinrichtung (26) zum Erzeugen eines vorhergesagten Audiosignals $\hat{x}$ aus den Vorhersagekoeffizienten A und dem wiederhergestellten Audiosignal $\tilde{x}$;
- wobei die Erzeugungseinrichtung eine erste Transformationseinrichtung (25) zum Transformieren des vorhergesagten Audiosignals $\tilde{x}$ aus der Zeitdomäne in die Frequenzdomäne zum Erzeugen eines Satzes vorhergesagter Frequenzunterband-Signale $\hat{x}_i(k)$, eine Kombiniereinrichtung (24) zum Kombinieren des Satzes vorhergesagter Frequenzunterband-Signale $\tilde{x}_i(k)$ mit den quantisierten Abweichungssignalen E(k) zum Erzeugen eines Satzes wiederhergestellter Frequenzunterband-Signale $\tilde{x}_i(k)$ sowie eine zweite Transformationseinrichtung (9) zum Ausführen einer Transformation von der Frequenz- in die Zeitdomäne hinsichtlich der wiederhergestellten Frequenzunterband-Signale $\tilde{x}(k)$ zum Erzeugen des wiederhergestellten, quantisierten Audiosignals $\tilde{x}$ aufweist.

## Revendications

**1.** Une méthode de codage d'un signal audio, la méthode comportant les étapes de:

réception d'un signal audio x devant être codé;
génération (1) de sous-bandes de fréquence à partir d'une trame de temps du signal audio reçu
génération (9, 11) d'un signal audio quantifié $\tilde{x}$ à partir du signal audio reçu *x*;
génération (2) d'un ensemble de coefficients de prévision à long terme *A*, prévoyant (8) une trame de temps courante du signal audio reçu en utilisant l'ensemble de coefficients de prévision à long terme *A* pour chaque sous-bande d'une trame de temps, directement à partir d'au moins une trame de temps précédente du signal audio quantifié $\tilde{x}$;
utilisation (12) l'ensemble des coefficients de prévision à long terme *A* pour générer un signal audio prévu $\hat{x}$ du signal audio quantifié $\tilde{x}$;
comparaison (14) du signal audio reçu *x* avec le signal audio prévu $\hat{x}$, et génération d'un signal d'erreur E(k) pour chaque sous-bande de la pluralité de sous-bandes de fréquence;
quantification (3) des signaux d'erreur E(k) pour générer un ensemble de signaux d'erreur quantifiés $\tilde{E}(k)$; et
combinaison (5) des signaux d'erreur quantifiés $\tilde{E}(k)$ et des coefficients de prévision *A* pour générer un signal audio codé.

**2.** Méthode selon la revendication 1 et comportant une transformation (1) du signal audio reçu *x* dans des trames $x_m$ du domaine de temps vers le domaine de fréquence, pour fournir un ensemble de signaux de sous-bande de fréquence X(*k*), et une transformation (13) du signal audio prévu $\hat{x}$ du domaine de temps au domaine de fréquence, pour générer un ensemble de signaux de sous-bande de fréquence prévu $\hat{x}$, dans lequel la comparaison entre le signal audio reçu x et le signal audio prévu $\hat{x}$ est effectuee dans le domaine de fréquence, en comparant (14) des signaux de sous-bande respective les uns aux autres, pour générer les signaux d'erreur de sous-bande de fréquence E(*k*).

**3.** Méthode selon la revendication 1 et comportant l'application (15) de la comparaison entre le signal audio reçu *x* et le signal audio prévu $\hat{x}$ dans le domaine de temps, pour générer un signal d'erreur e aussi dans le domaine de temps, et la conversion (16) du signal d'erreur *e* du domaine de temps au domaine de fréquence, pour générer ladite pluralité de signaux d'erreur de sous-bande de fréquence $E(k)$.

4. Méthode de décodage d'un signal audio codé, la méthode comportant les étapes de:

réception d'un signal audio codé comportant un signal d'erreur quantifié $\tilde{E}(k)$ pour chaque sous-bande de la pluralité de sous-bandes de fréquence du signal audio, et, pour chaque trame de temps du signal audio, un ensemble de coefficients de prévision $A$ qui peuvent être utilisés pour prévoir chaque sous-bande de fréquence d'une trame de temps courante $x_m$ du signal audio reçu, directement à partir d'au moins une trame de temps précédente d'un signal audio quantifié reconstitué $\tilde{x}$ ;

génération (24, 25, 9) dudit signal audio quantifié reconstitué $\tilde{x}$ à partir des signaux d'erreur quantifié $\tilde{E}(k)$ ;

utilisation (26) des coefficients de prévision $A$ et du signal audio quantifié $\tilde{x}$ pour générer un signal audio prévu $\hat{x}$ ;

transformation (25) du signal audio prévu $\hat{x}$ du domaine de temps au domaine de fréquence, pour générer un ensemble de signaux de sous-bande de fréquence prévus $\hat{x}$, pour la combinaison avec les signaux d'erreur quantifiés $\tilde{E}(k)$, pour générer (24) un emsemble de signaux de sous-bande de fréquence reconstitués $\tilde{x}(k)$ ; et

application (9) d'une transformation du domaine de fréquence au domaine de temps sur les signaux de sous-bande de fréquence reconstitués $\tilde{x}_i(k)$, pour générer le signal audio quantifié reconstitué $\tilde{x}$.

5. Dispositif pour le codage d'un signal audio, le dispositif comportant:

une entrée pour recevoir un signal audio x devant être codé;

un premier moyen de génération (1) pour générer des sous-bandes de fréquence à partir d'une trame de temps du signal audio reçu;

un moyen de traitement (2, 3 ; 15 à 19) couplé à ladite entrée, pour générer à partir du signal audio reçu $x$, un signal audio quantifié $\tilde{x}$ ;

un moyen de prévision (12;19) couplé audit moyen de quantification (3) pour générer un ensemble de coefficients de prévision à long terme $A$ pour l'utilisation pour chaque sous-bande d'une trame de temps, pour prévoir une trame de temps courante $x_m$ du signal audio reçu $x$, directement à partir d'au moins une trame de temps précédente du signal audio quantifié $\tilde{x}$ ;

un deuxième moyen de génération (10 à 14;20,15) pour générer un signal audio prévu $\hat{x}$ par l'utilisation de l'ensemble des coefficients de prévision à long terme A et le signal audio quantifié $\tilde{x}$, et pour comparer le signal audio reçu $x$ avec le signal audio prévu $\tilde{x}$, pour générer un signal d'erreur $E(k)$ pour chaque sous-bande de la pluralité de sous-bandes de fréquence;

un moyen de quantification (3;17) pour quantifier les signaux d'erreur $E(k)$, pour générer un ensemble de signaux d'erreur quantifié $\tilde{E}(k)$ ; et

un moyen de combinaison (5;21) pour combiner les signaux d'erreur quantifiés $\tilde{E}(k)$ avec les coefficients de prévision $A$, pour générer un signal audio codé.

6. Dispositif selon la revendication 5, dans lequel ledit deuxième moyen de génération comporte un premier moyen de transformation (1), pour transformer le signal audio reçu x du domaine de temps au domaine de fréquence, et un second moyen de transformation (13), pour transformer le signal audio prévu $\hat{x}$ du domaine de temps au domaine de fréquence, et un moyen de comparaison (14), prévu pour comparer les signaux du domaine de fréquence résultant dans le domaine de fréquence.

7. Dispositif selon la revendication 5, dans lequel le deuxième moyen de génération est prévu pour comparer le signal audio reçu x et le signal audio prévu $\hat{x}$ dans le domaine de temps.

8. Dispositif pour le décodage d'un signal audio codé $x$, dans lequel le signal audio codé comporte un signal d'erreur quantifié $\tilde{E}(k)$ pour chaque sous-bande d'une pluralité de sous-bandes de fréquence du signal audio, et un ensemble de coefficients de prévision $A$ pour l'utilisation pour chaque sous-bande de fréquence d'une trame de temps du signal audio, et dans lequel les coefficients de prévision $A$ peuvent être utilisés pour prévoir une trame de temps courante $x_m$ du signal audio reçu, directement à partir d'au moins une trame de temps précédente d'un signal audio quantifié reconstitué $\tilde{x}$, le dispositif comportant:

une entrée pour recevoir le signal audio codé;

un moyen de génération (24,25,9) pour générer ledit signal audio quantifié reconstitué $\tilde{x}$ à partir des signaux d'erreur quantifié $\tilde{E}(k)$ ; et

un moyen de traitement de signal (26) pour générer un signal audio prévu $\hat{x}$ à partir des coefficients de prévision $A$ et dudit signal audio reconstitué $\tilde{x}$,

dans lequel ledit moyen de génération comporte un premier moyen de transformation (25) pour transformer le signal audio prévu $\hat{x}$ du domaine de temps au domaine de fréquence, pour générer un ensemble de signaux de sous-bande de fréquence prévus $\hat{X}$, un moyen de combinaison (24) pour combiner ledit ensemble de signaux de sous-bande de fréquence prévus $\hat{X}$ avec les signaux d'erreur quantifiés $\tilde{E}(k)$, pour générer un ensemble de signaux de sous-bande de fréquence reconstitués $\tilde{X}(k)$, et un second moyen de transformation (9) pour appliquer une transformation du domaine de fréquence au domaine de temps, sur les signaux de sous-bande de fréquence reconstitués $\tilde{X}(k)$, pour générer le signal audio quantifié reconstitué $\tilde{x}$.

Figure 1

Figure 2

Figure 3

Figure 4

Figure 5